# FASCICULE DE BREVET EUROPEEN

(11) **EP 0 970 316 B1**
(45) Date de publication et mention de la délivrance du brevet: **02.10.2002**
(21) Numéro de dépôt: 99901638.9
(22) Date de dépôt: 28.01.1999
(51) Int. Cl.: F16D 13/64

(54) **DISQUE DE FRICTION PERFECTIONNE, NOTAMMENT POUR UN EMBRAYAGE DE VEHICULE AUTOMOBILE**
VERBESSERTE REIBSCHEIBE, INSBESONDERE FÜR EINE KRAFTFAHRZEUGKUPPLUNG
IMPROVED FRICTION PLATE, IN PARTICULAR FOR MOTOR VEHICLE CLUTCH

(30) Priorité: 28.01.1998 FR 9800891; 28.01.1998 WO PCT/FR98/00153; 21.12.1998 FR 9816100
(43) Date de publication de la demande: 12.01.2000
(73) Titulaire: VALEO, 75017 Paris (FR)
(72) Inventeur: THIRION DE BRIEL, Jacques, F-92700 Colombes (FR); HONORE, Emmanuelle, F-75019 Paris (FR)
(74) Mandataire: Gamonal, Didier
(86) Numéro de dépôt international: FR9900161
(87) Numéro de publication internationale: WO99039110

(56) Documents cités:
- EP-A- 0 579 554
- US-A- 4 993 531

## Description

La présente invention concerne un disque de friction, notamment d'embrayage de véhicule automobile.

L'invention concerne plus particulièrement un disque de friction du type de celui décrit et représenté dans le document EP-A-0.579.554.

Ce document décrit et représente un disque de friction comportant un voile de support de garnitures de friction ou de frottement en forme de rondelle dont la partie périphérique externe est fractionnée en des pales radiales portant des garnitures de frottement, notamment axialement de part et d'autre, chaque pale étant de type tripode et présentant, à la faveur de plis, une zone centrale de portée reliée à la partie centrale du voile et deux zones périphériques de portée agencées tangentiellement de part et d'autre de la zone centrale de portée.

Cette conception dans laquelle les pales de type tripode ont une forme globalement symétrique par rapport à un axe de symétrie radial permet de procurer aux pales une tenue à la force centrifuge aussi grande que souhaitée, la zone centrale de portée servant à la fixation d'une première des garnitures de frottement, tandis que les zones périphériques de portée sont destinées à venir en contact avec la seconde des garnitures de frottement.

De plus, le contact avec notamment le plateau de pression de l'embrayage est grandement amélioré en évitant que la zone, suivant laquelle les garnitures de frottement sont soumises à la pression de l'un et l'autre des deux plateaux entre lesquels le disque de friction est serré, ne se décale progressivement vers l'axe de l'ensemble, l'usure des garnitures de frottement étant ainsi globalement égale et régulière.

La conception selon l'art antérieur propose donc un disque porte-garnitures standard pouvant tourner à grande vitesse tout en favorisant la diminution des phénomènes d'incrustation, de broutement et en ayant une possibilité de mise en cône.

La présente invention concerne un perfectionnement à un disque de friction du type de celui décrit et représenté dans le document EP-A-0.579.554 qui permet notamment d'en accroître encore les capacités de tenue à la force centrifuge et/ou de résistance à la déformation résultant des variations de température en fonctionnement, ces phénomènes affectant plus particulièrement les zones périphériques de portée de chaque pale de type tripode.

Dans ce but, l'invention propose un disque de friction caractérisé en ce que chacune des zones périphériques de portée est reliée à la partie centrale du voile.

Selon d'autres caractéristiques de l'invention :
- chaque pale de type tripode présente un axe de symétrie radial ;
- chaque zone centrale de portée est raccordée à la partie centrale du voile par un pli tangentiel perpendiculaire à l'axe de symétrie radial de la pale tripode qui forme le pied de la pale et permet un décalage axiale de la zone centrale de portée par rapport au plan général de la partie centrale du voile ;
- chaque zone centrale de portée est raccordée aux zones périphériques par des plis obliques par rapport à l'axe de symétrie radial de la pale de type tripode ;
- les zones périphériques de portée sont décalées axialement par rapport au plan de la zone centrale de portée en étant parallèle à cette dernière ;
- les zones périphériques de portée s'étendent dans le plan de la partie centrale du voile ;
- les zones périphériques de portée sont décalées axialement par rapport au plan de la partie centrale du voile ;
- chacune des zones périphériques de portée est reliée à la partie centrale du voile par une bande d'orientation globalement radiale ;
- la bande de liaison s'étend sensiblement parallèlement au pli oblique adjacent qui raccorde la zone périphérique correspondante de portée à la zone centrale de portée ;
- chacune des zones périphériques de portée est reliée directement à la partie centrale du voile par une bande de liaison coplanaire à la partie centrale du voile et aux zones périphériques de portée ;
- les bandes de liaison de deux zones périphériques de portée voisines appartenant à deux pales consécutives de type tripode sont réalisées en une seule bande de liaison d'orientation globalement radiale ;
- les bandes de liaison de deux zones périphériques de portée voisines appartenant à deux pales consécutives de type tripode sont indépendantes l'une de l'autre ;
- les dites pales du type tripode alternent circonférentiellement avec une série de languettes radiales dont chacune, à la faveur d'un pli, présente à son extrémité libre une zone de portée supplémentaire ;
- la zone de portée supplémentaire est raccordée à la partie centrale du voile par un pli tangentiel de raccordement perpendiculaire à l'axe de symétrie radial de la languette ;
- chaque zone périphérique de portée est reliée à la partie centrale du voile par une bande de liaison dont l'extrémité radialement interne est située radialement en dessous du pli tangentiel de raccordement de la zone de portée supplémentaire de la languette radiale voisine ;
- chaque zone centrale de portée comporte une partie radialement interne et une partie radialement externe moins large circonférentiellement que la partie interne ;
- chaque zone centrale de portée est délimitée radialement par un bord externe en arc de cercle ;
- chaque zone centrale de portée est délimitée radialement par un bord externe rectiligne tangentiel ;
- chaque languette radiale est délimitée radialement par un bord externe en arc de cercle ;
- les pales de type tripode sont réparties en deux jeux de pales, les zones périphériques de portée des pales de l'un des jeux et leurs bandes de liaison étant dans le plan de la zone centrale de portée des pales de l'autre jeu.

D'autres caractéristiques et avantages de l'invention apparaîtront à la lecture de la description détaillée qui suit pour la compréhension de laquelle on se reportera aux dessins annexés dans lesquels :
- la figure 1 est une vue de face d'un premier exemple de réalisation d'un voile support de garnitures de frottement pour la réalisation d'un disque de friction conforme aux enseignements de l'invention et comportant alternativement des pales de type tripode et des languettes radiales ;
- la figure 2 est une vue similaire à celle de la figure 1 qui illustre une variante du premier mode de réalisation ;
- la figure 3 est une vue similaire à celles des figures 1 et 2 qui illustre un deuxième mode de réalisation d'un voile de support pour un disque de friction conforme aux enseignements de l'invention qui ne comporte que des pales de type tripode ; et
- la figure 4 est une vue similaire à celle de la figures 1 à 3 qui illustre un troisième mode de réalisation d'un voile de support pour la réalisation d'un disque de friction conforme aux enseignements de l'invention qui ne comporte que des pales de type tripode réparties en deux jeux de pales alternées.
- la figure 5 est une demie vue partielle d'un dispositif amortisseur de torsion équipé d'un voile selon l'invention.

Dans la description qui va suivre, des composants identiques, similaires ou analogues sont désignés par les mêmes chiffres de référence.

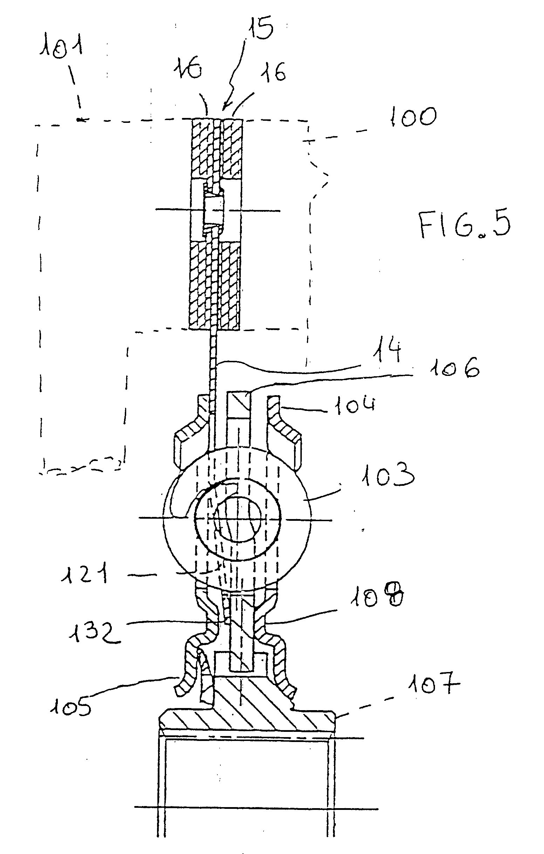

Sur les figures, pour simplifier la description, c'est volontairement que les garnitures de frottement ou de friction qui équipent le disque de friction sur ses deux faces axiales opposées, n'ont été représentées qu'à la figure 5.

Chaque garniture de friction peut être constituée par un anneau continu ou elle peut être fractionnée en des blocs ou pavés séparés par des fentes d'orientation globalement radiale.

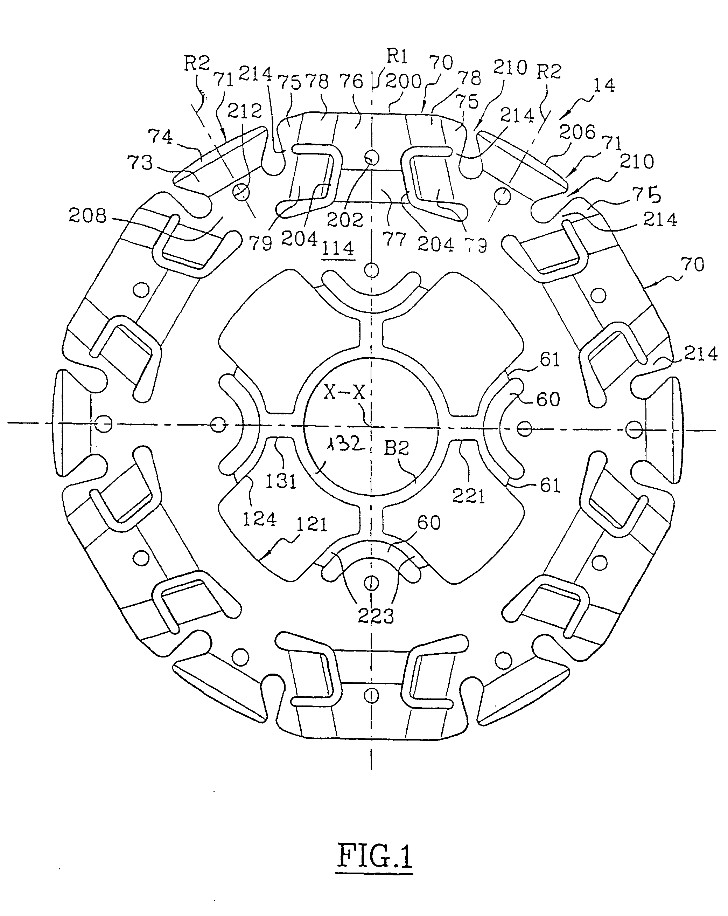

Ainsi, sur la figure 1, on a représenté seulement le voile 14 en forme générale de rondelle servant de support aux garnitures de frottement.16 appartenant avec le voile 14 à un disque de friction 15.

Le voile 14 est une pièce en tôle mince découpée et pliée.

Le voile de support 14 est essentiellement constitué par une partie centrale annulaire 114 située globalement radialement vers l'intérieur par rapport à l'axe X-X du voile 14, tandis que sa partie périphérique externe, qui s'étend radialement au delà de la partie centrale 114, est divisée ou fractionnée en des pales radiales 70, ici au nombre de six, qui sont réparties angulairement de manière régulière autour de l'axe X-X et autant de languettes radiales 71 qui alternent circonférentiellement avec les pales 70.

La partie centrale 114, au sens de l'invention, du voile 14 de support des garnitures est une partie plane qui s'étend dans un plan perpendiculaire à l'axe X-X.

Selon une conception connue, notamment du document EP-A-0.579.554, chaque pale 70 est du type dit "tripode".

Pour connaître l'agencement alterné de pales de type tripode et de languettes radiales, on peut aussi se reporter au contenu du document FR-A-2.702.811 ou au document US-A-5.452.783.

Chaque pale tripode 70 comporte une zone centrale de portée sur laquelle prend appui et est fixée une première garniture de friction 16 et deux zones périphériques de portée 75 pour contact avec la deuxième garniture de friction 16.

Chaque pale tripode 70 présente une symétrie générale de conception par rapport à un axe radial R1.

Ainsi, les deux zones périphériques de portée 75 sont agencées tangentiellement de part et d'autre de la zone centrale de portée 76 qui présente elle-même une symétrie de conception par rapport à l'axe de symétrie radial R1.

Dans le premier mode de réalisation illustré à la figure 1, les deux zones périphériques 75 de chaque pale 70 sont planes et elles sont situées dans le même plan que celui de la partie centrale annulaire 114.

La zone centrale de portée 76 est elle aussi une zone plane mais qui s'étend dans un plan décalé axialement par rapport à celui de la zone centrale annulaire 114.

A cet effet, la zone centrale de portée 76 est raccordée radialement vers l'intérieur à la zone centrale annulaire 114 du voile 14 par un pli tangentiel 77 qui s'étend selon une direction globalement perpendiculaire à l'axe de symétrie radial R1.

De même, chacune des zones périphériques de portée 75 est reliée à la zone centrale de portée 76 par un pli oblique 78.

Les plis obliques 78 sont d'orientation globalement radiale mais ils sont inclinés par rapport à l'axe de symétrie radial R de façon que chaque zone centrale de portée 76 comporte une partie radialement interne, adjacente au pli tangentiel 77, et une partie radialement externe, délimitée par un bord externe rectiligne 200 tangentiel et parallèle au pli 77, qui est moins large circonférentiellement que la partie interne.

Dans l'exemple illustré à la figure 1, chaque zone centrale de portée 76 comporte aussi, à titre d'exemple, un trou 202 pour le passage d'un rivet de fixation de garniture(s) de friction.

Chaque pale tripode 70 est raccordée à la partie centrale 114 du voile 14 par son pli tangentiel 77 qui constitue le pied radial interne de la pale tripode.

Dans le mode de réalisation illustré à la figure 1, la zone centrale de portée 76 et les zones périphériques de portée 75 sont aussi délimitées par des découpes 204 en forme générale de C dont les branches horizontales s'étendent tangentiellement à travers les plis obliques 78.

Chaque languette radiale 71 comporte à son extrémité radiale externe, délimitée par un bord externe en arc de cercle 206, une zone de portée supplémentaire 74 pour une garniture de friction.

La zone 74 de chaque languette radiale 71 est raccordée à la partie centrale annulaire 114 du voile 14 par un pli tangentiel 73.

Le pli tangentiel 73 est globalement perpendiculaire l'axe de symétrie radial R2 de la languette 71.

Plus précisément, chaque pli tangentiel 73 raccorde la zone de portée supplémentaire 74 à une partie intermédiaire 208 constituant le pied de la languette 71 qui est agencé radialement entre la zone centrale annulaire 114 et le pli tangentiel 73, cette partie formant pied 208 prolongeant la partie centrale annulaire 114 et s'étendant dans le même plan que cette dernière et par exemple dans le même plan que les zones de portée périphériques 75.

Par contre, du fait de la présence du pli tangentiel 73, la zone de portée supplémentaire 74 est décalée axialement par rapport au plan de la partie centrale annulaire 114 et elle s'étend par exemple sensiblement dans le même plan que les parties de portée centrales 76 des pales tripodes 70.

Chaque languette 71 est délimitée circonférentiellement par rapport aux deux pales tripodes adjacentes 70 par deux fentes 210 d'orientation globalement radiale qui sont obliques par rapport à l'axe de symétrie radial R2 de manière que chaque languette 71 comporte une partie radialement interne et une partie radialement externe plus large circonférentiellement que la partie interne constituée par le pied 208.

Chaque partie interne constituée par un pied 208 comporte aussi un trou 212 pour le passage d'un rivet de fixation de garniture(s) de friction, ici la deuxième garniture de friction.

Conformément aux enseignements de l'invention, et comme on peut le voir sur la figure 1, chacune des zones périphériques de portée 75 est reliée à la partie centrale annulaire 114 du voile 14 par une bande de liaison 214.

Chaque bande de liaison 214 est réalisée venue de matière en une seule pièce avec le voile 14 et elle s'étend globalement selon une direction radiale.

Plus précisément, dans le mode de réalisation illustré à la figure 1, chaque bande de liaison est adjacente au pli oblique 78 qui sépare la zone périphérique de portée 75 qu'elle relie à la partie centrale annulaire 114 de la zone centrale de portée 76.

Dans ce premier mode de réalisation, l'extrémité radiale interne de chaque bande de liaison 214 relie la zone périphérique de portée 75 au pied 208 de la languette radiale adjacente 71, et elle la relie donc indirectement à la partie centrale annulaire 114.

Ainsi, chaque zone périphérique de portée 75 est reliée d'une part à la zone centrale de portée 76 à la faveur d'un pli oblique 78 et à la partie annulaire centrale 114 à la faveur de la bande de liaison 214 qui la raccorde au pied 208 d'une languette radiale 71.

Comme on peut le voir sur la figure 1, le fond de chaque fente 210 situé radialement vers l'intérieur est élargi et de profil semi-circulaire pour réaliser simultanément la conformation des languettes radiales 71 et des bandes de liaison 214, tout en évitant les phénomènes d'amorce de rupture à ce niveau.

Des pattes 79 sont disposées tangentiellement de part et d'autre du pli tangentiel 77 et leur forme résulte des découpes 204 en C.

Les pattes 79 sont affectées par les plis 78 et elles ont une zone d'enracinement dans le plan d'une zone périphérique de portée 75, ici dans le plan des languettes radiales 71 et de la partie centrale annulaire 114 du voile 14. Le bout des pattes 79 est dans le plan des zones centrales de portée 76.

Dans le mode de réalisation illustré à la figure 1, et afin de permettre son intégration dans un dispositif amortisseur de torsion, le voile 14 présente une portion centrale élastique et cambrée qui est située radialement à l'intérieur par rapport à la partie centrale annulaire 114 à laquelle sont reliées les pales tripodes 70 et les languettes radiales 71.

La portion centrale comporte des pattes 131, un anneau central continu 132 et des fenêtres 121 prévues pour le passage à jeu de ressorts 103 appartenant à l'amortisseur de torsion. Les fenêtres 121 sont dépourvues de rebords et ne servent pas au logement des ressorts.

Les pattes 131 sont délimitées extérieurement chacune d'une part par l'ouverture 60 en forme de croissant s'étendant en dessous d'un trou de passage 61 d'une colonnette appartenant à l'amortisseur de torsion et, d'autre part, par une ligne de cambrage 61. Cette ligne 61 de cambrage comporte deux tronçons de part et d'autre d'une ouverture 60.

Les tronçons du pli de cambrage 61 s'étendent depuis l'ouverture 60 jusqu'au bord latéral 124 d'une fenêtre 121 délimitée radialement vers l'intérieur par l'anneau 132.

Les pattes 131 s'étendent radialement entre deux fenêtres consécutives 121 et elles sont limitées latéralement par ces fenêtres consécutives.

Intérieurement, les pattes 131 se raccordent à l'anneau 132. On note que les coins inférieurs 221 des fenêtres sont élargis, dans le sens circonférentiel, de sorte que les pattes 131 ont la forme d'une mince bande de matière d'orientation radiale qui s'étend entre deux coins adjacents 221 et s'épanouissent radialement au delà des coins pour présenter deux portions courbes 223 épousant la forme d'une ouverture 60.

On peut modifier la raideur des pattes 131 élastiques axialement en modifiant la forme des découpes, notamment la forme des ouvertures 60 des coins 221, et/ou l'angle de cambrage. On peut supprimer ainsi les coins 221.

Les pattes 131 sont inclinées axialement de manière que l'anneau central 132 soit décalé axialement par rapport au plan dans lequel s'étend la partie centrale annulaire 114.

Ainsi qu'il ressort à l'évidence de ce qui précède, le voile 14 est traité mécaniquement et thermiquement pour lui conférer l'élasticité voulue.

Les languettes 71 ont une étendue circonférentielle inférieure à celle des pales 70, dont la zone centrale de portée 76 sert à la fixation, ici par rivelage, de la seconde des garnitures de friction 16.

Les zones 75 s'étendent à la périphérique externe de la pale 70, radialement au-dessus du pli 77, et sont destinées à venir en contact avec la seconde des garnitures de friction 16.

La partie 74 est une partie supplémentaire pour la première des garnitures de friction 16.

On notera que les découpes 204 d'une même pale 70 sont dirigées en sens inverse l'une par rapport à l'autre.

Ici (figure 5) la première garniture de friction 16 est destinée à coopérer avec le plateau de pression 100 de l'embrayage à friction, tandis que la seconde garniture de friction 16 est destinée à coopérer avec le plateau de réaction 101 de l'embrayage représenté schématiquement en traits pointillés comme le plateau de pression 100, qui se déforme plus thermiquement que le plateau de réaction. Dans cette figure 5, l'anneau 132 porte élastiquement sur un voile de moyeu 106.engrénant avec jeu circonférentiel avec un moyeu 107 cannelé intérieurement pour sa liaison avec un arbre mené.

De part et d'autre du voile 106 sont disposées deux rondelles de guidage 104, 105 liées entre elles par les colonnettes (non visibles) les ressorts 103 étant montés des fenêtres ménagées en vis-à-vis de la voile 106 et les rondelles de guidage 105, 104, dont l'une est dotée d'un ou de plusieurs emboutis 108 pour venir en contact avec le voile de moyeu 106 sous la sollicitation axiale exercée par le voile 14.

On économise ainsi une rondelle élastique à action axiale grâce au voile 14, conformée en rondelle élastique.

Le voile 14, et donc le disque de friction 15 constitué du voile 14 et des garnitures 16, est grâce à l'invention, ici grâce aux bandes 214, rigidifié, plus robuste et est moins sensible aux phénomènes de la force centrifuge et aux phénomènes thermiques sans supprimer les zones périphérie externes de portée 75. La solution est simple et économique.

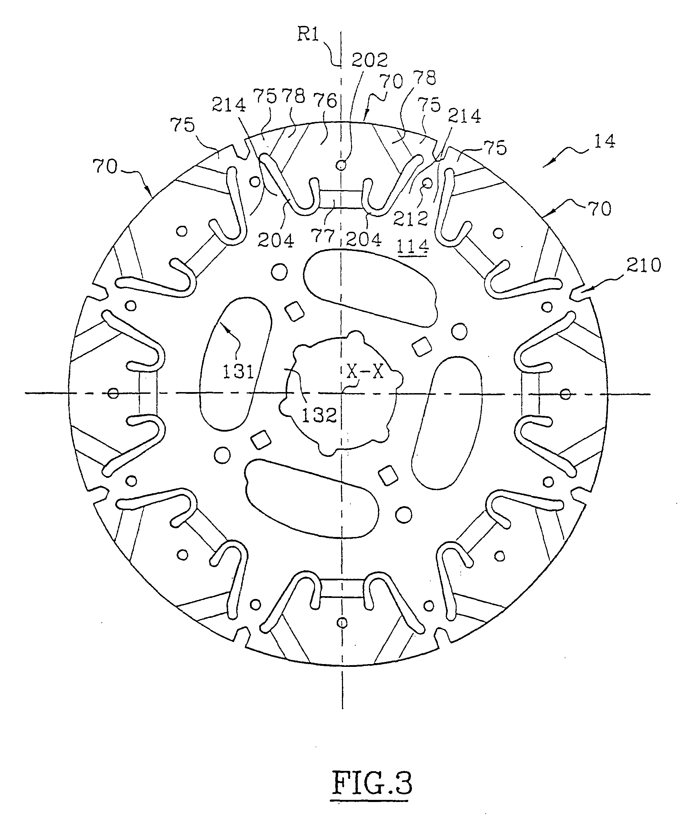

Les bandes de liaison 214 peuvent avoir une double fonction et remplacer les languettes 71 comme décrit dans le mode de réalisation de la figure 3.

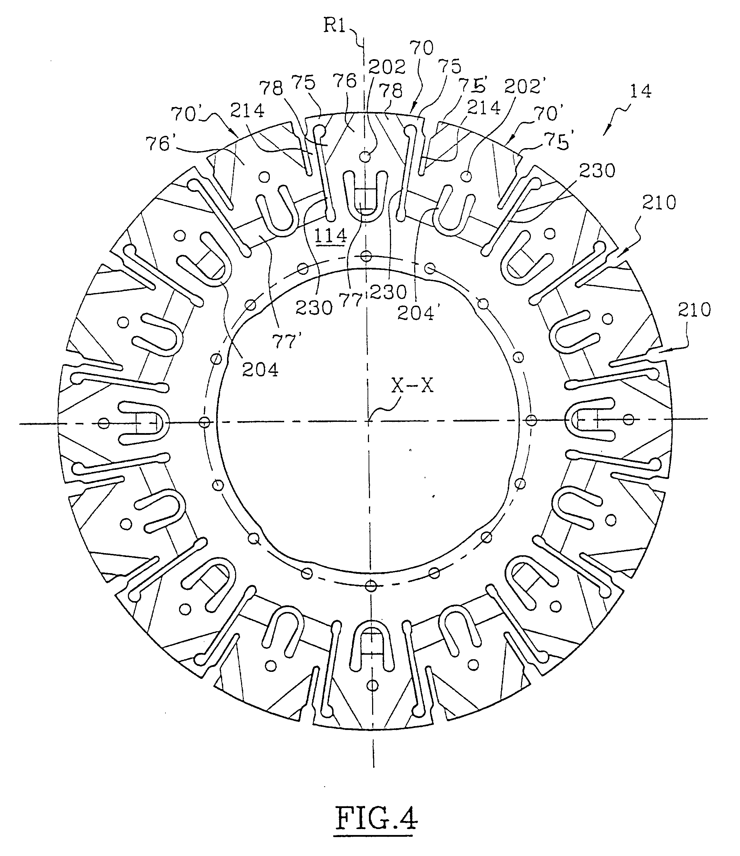

Les languettes 71 peuvent être remplacées par des pales 70 comme décrit dans le mode de réalisation de la figure 4.

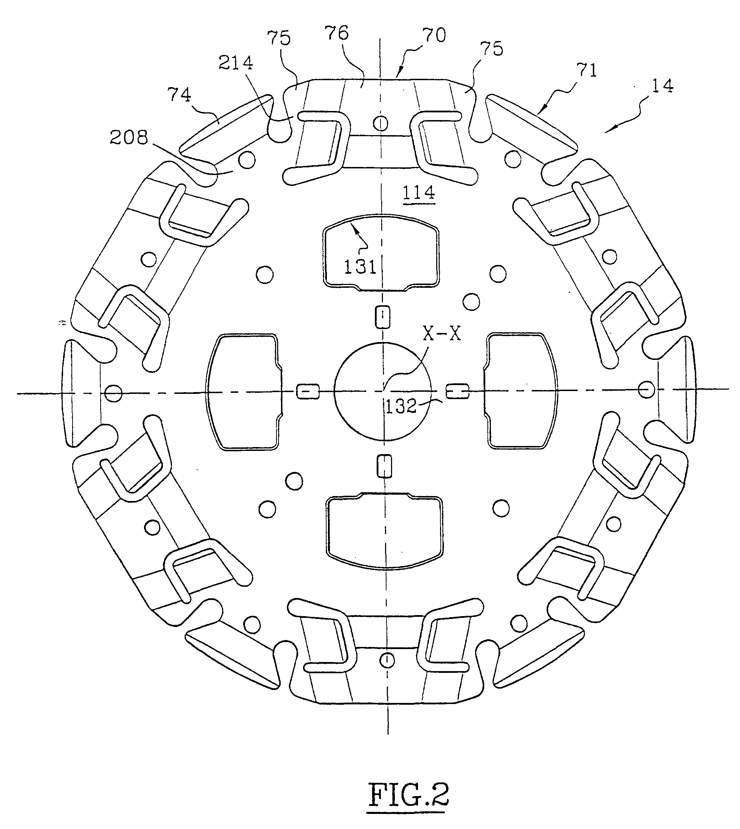

Dans la variante de réalisation illustrée à la figure 2, la portion radialement la plus interne du voile 14 comporte des fenêtres 131 de forme globalement rectangulaire mais elle n'est pas cambrée élastiquement, c'est-à-dire que l'anneau, central 132 est situé globalement dans le même plan que celui de la partie centrale annulaire 114.

On décrira maintenant le mode de réalisation illustré à la figure 3. Sur cette figure, on voit tout d'abord qu'il n'y a pas de languettes radiales intercalées entre les pales tripodes 70 qui sont ici au nombre de huit pales consécutives.

Toutes les zones centrales de portée 76 sont coplanaires de même que toutes les zones périphériques de portée 75.

Conformément aux enseignements de l'invention, et comme dans le cas des exemples de réalisation décrits précédemment en référence aux figures 1 et 2, chaque zone périphérique de portée 75 est reliée à la partie centrale annulaire 114 du voile 14 par une bande de liaison 214.

Du fait de l'absence de languettes radiales 71, les bandes de liaison 214 qui relient deux zones périphériques de portée 75 appartenant à deux pales tripodes consécutives et adjacentes sont réalisées sous la forme d'une bande de liaison unique de plus grande largeur tangentielle qui s'étend selon une direction radiale.

Les trous 212 pour le passage de rivets de fixation de garnitures de friction précédemment formés dans les languettes radiales 71 sont ici formés dans les bandes de liaison de grande largeur 214.

Les zones centrales de portée 76 et les bandes de liaison 214 sont délimitées par des découpes 204 dont chacune présente une forme de canne renversée.

La partie radialement la plus interne du voile 14 comporte des découpes ou fenêtres 131 en forme oblongue de haricot d'orientation générale tangentielle dont chacune est légèrement inclinée radialement vers l'intérieur par rapport à la direction tangentielle.

Les fenêtres sont au nombre de quatre et elles sont décalées angulairement par rapport aux axes de symétrie radiaux R1 des pales tripodes 70.

L'anneau central 132 est situé dans le même plan que la partie centrale annulaire 114 sans cambrage élastique.

Dans le mode de réalisation illustré à la figure 4, comme dans celui illustré à la figure 3, il n'y a pas de languette radiale 71 et la partie périphérique externe du voile 14 est fragmentée en seize pales tripodes consécutives et adjacentes réparties angulairement de manière régulière autour de l'axe X-X.

Les seize pales tripodes appartiennent à deux séries alternées de huit pales tripodes 70 et 70'.

Chacune des pales 70 appartenant au premier jeu de huit pales présente une conception globale conforme aux enseignements de l'invention.

Ainsi, elles comportent une zone centrale de portée 76 et deux zones périphériques de portée 75.

Par contre, si on compare une telle pale 70 à celle illustrée par exemple à la figure 1, la zone centrale de portée 76 est coplanaire avec la partie centrale annulaire 114 du voile 14 tandis que les zones de portée périphériques 75 sont décalées axialement par rapport à ce plan à la faveur des plis obliques de raccordement 78.

Chaque zone périphérique 75 est reliée radialement à la zone centrale annulaire 114 par une bande de liaison 214 qui s'étend radialement vers l'intérieur à partir de la zone de portée périphérique correspondante 75.

Les zones de portée périphérique 75 d'une pale 70 sont coplanaires avec la zone centrale de portée 76' de la pale tripode adjacente 70'.

Ainsi, toutes les zones centrales de portée 76 sont coplanaires entre elles et coplanaires aux zones périphériques de portée 75' des pales 70', tandis que toutes les zones centrales de portée 76' des pales tripodes 70' sont coplanaires entre elles et coplanaires aux zones périphériques de portée 75 des pales 70 ainsi qu'aux bandes de liaison 214.

Chaque bande de liaison 214 assure ainsi indirectement la liaison d'une zone de portée périphérique 75 d'une pale 70 avec la partie centrale annulaire 114 par l'intermédiaire du pli tangentiel 77' formant pied de raccordement d'une pale 70' à la partie centrale annulaire 114.

Les bandes de liaison 214 sont délimitées tangentiellement par rapport à une zone de portée centrale 76 par une découpe rectiligne 230 d'orientation radiale tandis que les zones centrales de portée 76 et 76' sont délimitées radialement vers l'intérieur par des découpes 204 et 204' en forme de U avec leurs branches centrales disposées radialement vers l'intérieur en direction de l'axe X-X.

Dans le mode de réalisation illustré à la figure 4, le voile 14 formant support des garnitures de friction est de conception simplifiée, c'est-à-dire qu'il ne comporte pas de partie radialement interne au delà de sa partie centrale annulaire 114.

Le mode de fixation et la conformation des garnitures de frottement peuvent être quelconques, ce mode de fixation pouvant être par rivetage et/ou par collage, ou par tout autre moyen adapté.

Ainsi, la présence des trous 202, 202', 212 n'est pas obligatoire dans les figure 1 à 4.

En effet les garnitures de frottements peuvent être collées sur les zones centrales de portée des pales tripodes et sur les parties internes des languettes.

Les zones centrales de portée, dans une première forme de réalisation, sont revêtues totalement de colle. Dans une deuxième forme de réalisation, les zones centrales de portée sont revêtues d'un ou plusieurs cordons de colles s'étendant à proximité des bords latéraux de chacune des dites zones, à l'intérieur de celles-ci pour fixation de la garniture de frottement concernée comme décrit dans le document WO-A-98/44272 auquel on se reportera pour plus de précisions

Dans la figure 5, le voile 14 est implanté entre l'une 105 des rondelles de guidage et le voile de moyeu 106. En variante le voile 14 peut être implanté du côté de la rondelle de guidage 105 opposée au voile 106. Dans ce cas un dispositif de frottement est prévu pour faire entretoise entre le voile 106 et la rondelle 105.

## Revendications

1. Disque de friction (15), notamment d'embrayage de véhicule automobile, comportant un voile (14) de support en forme de rondelle dont la partie périphérique externe est fractionnée en des pales radiales (70) portant des garnitures de frottement, notamment axialement de part et d'autre, chaque pale (70) étant de type tripode et présentant, à la faveur de plis (77, 78), une zone centrale de portée (76) reliée à la partie centrale (114) du voile (14) et deux zones périphériques de portée (75) agencées tangentiellement de part et d'autre de la zone centrale de portée (76), **caractérisé en ce que** chacune des zones périphériques de portée (75) est reliée (214) à la partie centrale (114) du voile (14).

2. Disque de friction selon la revendication 1, **caractérisé en ce que** chaque pale de type tripode (70) présente un axe (R1) de symétrie radial, **en ce que** chaque zone centrale de portée (76) est raccordée aux zones périphériques (75) par des plis (78) obliques par rapport à l'axe (R1) de symétrie radial de la pale (70) de type tripode et **en ce que** les zones périphériques de portée (75) sont décalées axialement par rapport au plan de la zone centrale de portée (76) en étant parallèle à cette dernière.

3. Disque de friction selon la revendication précédente, **caractérisé en ce que** chaque zone centrale de portée (76) est raccordée à la partie centrale (144) du voile par un pli tangentiel (77) perpendiculaire à l'axe (R1) de symétrie radial de la pale tripode (70) qui forme le pied de la pale et permet un décalage axial de la zone centrale de portée (76) par rapport au plan général de la partie centrale (114) du voile (14).

4. Disque de friction selon la revendication 2, **caractérisé en ce que** chacune des zones périphériques de portée (75) est reliée à la partie centrale (114) du voile (14) par une bande (214) d'orientation globalement radiale.

5. Disque de friction selon la revendication 4, **caractérisé en ce que** la bande de liaison (214) s'étend sensiblement parallèlement au pli oblique (78) adjacent qui raccorde la zone périphérique correspondante de portée (75) à la zone centrale de portée (76).

6. Disque de friction selon la revendication 5, **caractérisé en ce que** chacune desdites zones périphériques de portée (75) est reliée directement à la partie centrale (114) du voile (14) par une bande de liaison (214) coplanaire à la partie centrale (14) du voile (14) et aux zones périphériques de portée (75).

7. Disque de friction selon la revendication 6, **caractérisé en ce que** les bandes de liaison (214) de deux zones périphériques de portée (75) voisines appartenant à deux pales consécutives de type tripode (70) sont réalisées en une seule bande de liaison (214) d'orientation globalement radiale.

8. Disque de friction selon la revendication 7, **caractérisé en ce que** lesdites pales du type tripode (70) alternent circonférentiellement avec une série de languettes radiales (71) dont chacune, à la faveur d'un pli (73), présente à son extrémité libre une zone de portée supplémentaire (74).

9. Disque de friction selon la revendication précédente, **caractérisé en ce que** la zone de portée supplémentaire est raccordée à la partie centrale (114) du voile (14) par un pli tangentiel (73) de raccordement perpendiculaire à l'axe de symétrie radial de la languette (71) et **en ce que** chaque zone périphérique de portée (75) est reliée à la partie centrale (114) du voile (14) par une bande de liaison (214) dont l'extrémité radialement interne est située radialement en dessous du pli tangentiel (73) de raccordement de la zone de portée supplémentaire (74) de la languette radiale (71) voisine.

10. Disque de friction selon la revendication 4, **caractérisé en ce que** les pales de type tripode sont réparties en deux jeux de pales (70, 70'), les zones périphériques de portée (75) des pales (70) de l'un des jeux et leurs bandes de liaison (214) étant dans le plan de la zone centrale de portée (76) des pales (70) de l'autre jeu.

## Patentansprüche

1. Reibungskupplungsscheibe (15), insbesondere für eine Kraftfahrzeugkupplung, umfassend eine belagtragende ringförmige Scheibe (14), deren äußerer Umfangsteil in radiale Segmente (70) unterteilt ist, die, insbesondere axial auf beiden Seiten, Reibbeläge tragen, wobei jedes Segment (70) mit drei Auflagestellen ausgeführt ist und mittels Biegungen (77, 78) einen mittleren Auflagebereich (76), der mit dem Mittelteil (114) der belagtragenden Scheibe (14) verbunden ist, und zwei Umfangsauflagebereiche (75) aufweist, die tangential beiderseits des mittleren Auflagebereichs (76) angeordnet sind, **dadurch gekennzeichnet, daß** jeder der Umfangsauflagebereiche (75) mit dem Mittelteil (114) der belagtragenden Scheibe (14) verbunden (214) ist.

2. Reibungskupplungsscheibe nach Anspruch 1, **dadurch gekennzeichnet, daß** jedes Segment (70) mit drei Auflagestellen eine radiale Symmetrieachse (R1) aufweist, daß sich jeder mittlere Auflagebereich (76) an die Umfangsauflagebereiche (75) über im Verhältnis zur radialen Symmetrieachse (R1) des Segments (70) mit drei Auflagestellen schräge Biegungen (78) anschließt und daß die Umfangsauflagebereiche (75) im Verhältnis zur Ebene des mittleren Auflagebereichs (76) axial versetzt sind, wobei sie parallel zu dieser verlaufen.

3. Reibungskupplungsscheibe nach dem vorangehenden Anspruch, **dadurch gekennzeichnet, daß** sich jeder mittlere Auflagebereich (76) an den Mittelteil (114) der belagtragenden Scheibe über eine tangentiale Biegung (77) senkrecht zur radialen Symmetrieachse (R1) des Segments (70) mit drei Auflagestellen anschließt, die den Fuß des Segments bildet und einen axialen Versatz des mittleren Auflagebereichs (76) im Verhältnis zur Gesamtebene des Mittelteils (114) der belagtragenden Scheibe (14) ermöglicht.

4. Reibungskupplungsscheibe nach Anspruch 2, **dadurch gekennzeichnet, daß** jeder der Umfangsauflagebereiche (75) mit dem Mittelteil (114) der belagtragenden Scheibe (14) durch einen insgesamt radial ausgerichteten Streifen (214) verbunden ist.

5. Reibungskupplungsscheibe nach Anspruch 4, **dadurch gekennzeichnet, daß** sich der Verbindungsstreifen (214) in etwa parallel zu der angrenzenden Schrägbiegung (78) erstreckt, die den entsprechenden Umfangsauflagebereich (75) an den mittleren Auflagebereich (76) anschließt.

6. Reibungskupplungsscheibe nach Anspruch 5, **dadurch gekennzeichnet, daß** jeder Umfangsauflagebereich (75) mit dem Mittelteil (114) der belagtragenden Scheibe (14) direkt über einen zum Mittelteil (114) der belagtragenden Scheibe (14) und zu den Umfangsauflagebereichen (75) komplanaren Verbindungsstreifen (214) verbunden ist.

7. Reibungskupplungsscheibe nach Anspruch 6, **dadurch gekennzeichnet, daß** die Verbindungsstreifen (214) von zwei benachbarten Umfangsauflagebereichen (75), die zu zwei aufeinanderfolgenden Segmenten (70) mit drei Auflagestellen gehören, in einem einzigen insgesamt radial ausgerichteten Verbindungsstreifen (214) ausgeführt sind.

8. Reibungskupplungsscheibe nach Anspruch 7, **dadurch gekennzeichnet, daß** sich die besagten Segmente (70) mit drei Auflagestellen umfangsmäßig mit einer Reihe von radialen Zungen (71) abwechseln, die jeweils, mittels einer Biegung (73), an ihrem freien Ende einen zusätzlichen Auflagebereich (74) aufweisen.

9. Reibungskupplungsscheibe nach dem vorangehenden Anspruch, **dadurch gekennzeichnet, daß** sich der zusätzliche Auflagebereich an den Mittelteil (114) der belagtragenden Scheibe (14) über eine tangentiale Anschlußbiegung (73) senkrecht zur radialen Symmetrieachse der Zunge (71) anschließt und daß jeder Umfangsauflagebereich (75) mit dem Mittelteil (114) der belagtragenden Scheibe (14) durch einen Verbindungsstreifen (214) verbunden ist, dessen radial inneres Ende sich radial unterhalb der tangentialen Anschlußbiegung (73) des zusätzlichen Auflagebereichs (74) der benachbarten radialen Zunge (71) erstreckt.

10. Reibungskupplungsscheibe nach Anspruch 4, **dadurch gekennzeichnet, daß** die Segmente mit drei Auflagestellen auf zwei Segmentgruppen (70, 70') verteilt sind, wobei die Umfangsauflagebereiche (75) der Segmente (70) einer der Segmentgruppen und ihre Verbindungsstreifen (214) in der Ebene des mittleren Auflagebereichs (76) der Segmente (70) der anderen Segmentgruppe liegen.

## Claims

1. Friction disk (15), especially of a motor-vehicle clutch, including a washer-shaped support web (14) the outer peripheral part of which is subdivided into radial blades (70) carrying friction linings, especially axially from place to place, each blade (70) being of tripod type and featuring, by virtue of folds (77, 78), a central bearing-surface area (76) linked to the central part (114) of the web (14) and two peripheral bearing-surface areas (75) arranged tangentially on either side of the central bearing-surface area (76), **characterised in that** each of the peripheral bearing-surface areas (75) is linked (214) to the central part (114) of the web (14).

2. Friction disk according to Claim 1, **characterised in that** each tripod-type blade (70) features an axis (R1) of radial symmetry, **in that** each central bearing-surface area (76) is connected to the peripheral areas (75) by folds (78) which are oblique with respect to the axis (R1) of radial symmetry of the tripod-type blade (70), and **in that** the peripheral bearing-surface areas (75) are offset axially with respect to the plane of the central bearing-surface area (76), while being parallel to the latter.

3. Friction disk according to the preceding claim, **characterised in that** each central bearing-surface area (76) is connected to the central part (114) of the web by a tangential fold (77) perpendicular to the axis (R1) of radial symmetry of the tripod blade (70) which forms the foot of the blade and allows an axial offset of the central bearing-surface area (76) with respect to the general plane of the central part (114) of the web (14).

4. Friction disk according to Claim 2, **characterised in that** each of the peripheral bearing-surface
areas (75) is linked to the central part (114) of the web (14) by a strip (214) of overall radial orientation.

5. Friction disk according to Claim 4, **characterised in that** the linking strip (214) extends substantially parallel to the adjacent oblique fold (78) which connects the corresponding peripheral bearing-surface area (75) to the central bearing-surface area (76).

6. Friction disk according to Claim 5, **characterised in that** each of the said peripheral bearing-surface areas (75) is linked directly to the central part (114) of the web (14) by a linking strip (214) which is coplanar with the central part (114) of the web (14) and with the peripheral bearing-surface areas (75).

7. Friction disk according to Claim 6, **characterised in that** the linking strips (214) of two neighbouring, peripheral bearing-surface areas (75) belonging to two consecutive tripod-type blades (70) are produced from a single linking strip (214) of overall radial orientation.

8. Friction disk according to Claim 7, **characterised in that** the said blades of the tripod type (70) alternate circumferentially with a series of radial tabs (71) each of which, by virtue of a fold (73), features a supplementary bearing-surface area (74) at its free extremity.

9. Friction disk according to the preceding claim, **characterised in that** the supplementary bearing-surface area is connected to the central part (114) of the web (14) by a tangential connecting fold (73) perpendicular to the axis of radial symmetry of the tab (71), and **in that** each peripheral bearing-surface area (75) is linked to the central part (114) of the web (14) by a linking strip (214) the radially inner extremity of which is situated radially below the tangential connecting fold (73) of the supplementary bearing-surface area (74) of the neighbouring radial tab (71).

10. Friction disk according to Claim 4, **characterised in that** the tripod-type blades are distributed into two sets of blades (70, 70'), the peripheral bearing-surface areas (75) of the blades (70) of one of the sets and their linking strips (214) being in the plane of the central bearing-surface area (76) of the blades (70) of the other set.
